# EUROPÄISCHE PATENTSCHRIFT

(11) **EP 3 034 251 B1**
(45) Veröffentlichungstag und Bekanntmachung des Hinweises auf die Patenterteilung: **25.04.2018**
(21) Anmeldenummer: 15003173.0
(22) Anmeldetag: 05.11.2015
(51) Int. Cl.: B26B 29/04, A01G 3/02

(54) **SCHUTZABDECKUNG FÜR SCHEREN**
PROTECTIVE COVER FOR SCISSORS
REVÊTEMENT DE PROTECTION POUR CISEAUX

(30) Priorität: 16.12.2014 DE 202014009962 U
(43) Veröffentlichungstag der Anmeldung: 22.06.2016
(73) Patentinhaber: MTD PRODUCTS INC., Valley City, Ohio 44280 (US)
(72) Erfinder: HELD, Peter, 57584 Scheuerfeld (DE)
(74) Vertreter: Feldkamp, Rainer

(56) Entgegenhaltungen:
- WO-A1-89/03171
- DE-C- 143 093
- DE-U1- 20 200 900
- US-A- 755 492
- US-A- 2 272 753
- US-A- 2 741 841

## Beschreibung

Die Erfindung bezieht sich auf eine Schutzabdeckung für Scheren der im Oberbegriff des Anspruchs 1 genannten Art.

Insbesondere bei größeren Scheren wie Garten- Ast- und Baumscheren wird zunehmend eine Schutzverpackung gefordert, damit Verletzungen ausgeschlossen werden. Diese Schutzverpackung soll Verletzungen und andere Schäden sowohl dann, wenn der Kunde die Schere vor dem Kauf in die Hand nimmt, als auch beim Gebrauch und/oder der Aufbewahrung der Schere sicher verhindern.

Üblicherweise bestehen derartige Schutzverpackungen aus einer zweischaligen transparenten Kunststoffschachtel oder aus einer Kombination von Pappe und Kunststoff, die jedoch vor dem erstmaligen Gebrauch zu entfernen und zumeist nicht wieder verwendbar ist.

Die bekannten Schutzverpackungen umhüllen gewöhnlich den gesamten Schneidbereich oder gar den ganzen Schneidkopf und sind meist so groß ausgeführt, dass der Kunde die prinzipielle Bedienung der Schere bereits vor dem Kauf erproben kann. Das bedeutet, dass das Schachtel-Innere genügend Raum für den Bewegungsbereich des Scherenmessers bieten muss. Später sind diese Schachteln meist nutzlos und müssen von dem Käufer entsorgt werden.

Der Erfindung liegt die Aufgabe zugrunde, eine Schutzabdeckung der eingangs genannten Art zu schaffen, die nicht nur als Verpackung dienen kann, sondern auch beim späteren Einsatz der Schere als Eingriffschutz und Transportsicherung dienen kann, und die einen geringen Raumbedarf aufweist.

Diese Aufgabe wird durch die im Patentanspruch 1 angegebenen Merkmale gelöst.

Vorteilhafte Ausgestaltungen und Weiterbildungen der Erfindung ergeben sich aus den Unteransprüchen.

Durch die erfindungsgemäße Ausgestaltung der Schutzabdeckung wird anstelle einer Abdeckung des gesamten Schneidbereichs von außen im Wesentlichen nur der gefährliche Bereich zwischen den beiden Klingen abgedeckt, so dass der Raum- und Materialbedarf der Schutzabdeckung verringert wird.

Dennoch lässt sich die Schere auch bei montiertem Eingreifschutz zu Demonstrationszwecken und zur Erprobung durch den Kunden noch fast vollständig schließen.

Die Erfindung wird im Folgenden anhand einer in der Zeichnung dargestellten Ausführungsform noch näher erläutert.

In der Zeichnung zeigen:
- Figur 1: eine Ansicht einer Schere in Form einer Gartenschere, die das Aufsetzen einer Ausführungsform der Schutzabdeckung in Richtung des Pfeils A zeigt, wobei die Schere im geöffneten Zustand gezeigt ist;
- Figur 2: eine perspektivische Ansicht der Schere nach Figur 1 bei auf die Schere aufgesetzter Schutzabdeckung;
- Figur 3: eine der Figur 1 entsprechende rechte Seitenansicht der Schere mit geöffneten Klingen und aufgesetzter Schutzabdeckung;
- Figur 4: eine rechte Seitenansicht der Schere mit aufgesetzter Schutzabdeckung bei weitgehend aufeinander geschlossenen Schneidkanten der Klingen;
- Figur 5: eine der Figur 3 entsprechende linke Seitenansicht der Schere mit aufgesetzter Schutzabdeckung und geöffneten Klingen;
- Figur 6: eine linke Seitenansicht der Schere mit aufgesetzter Schutzabdeckung und weitgehend aufeinander geschlossenen Klingen;
- Figur 7: eine perspektivische Ansicht einer Ausführungsform der Schutzabdeckung bei Betrachtung von der Klingenspitze aus in Richtung auf das Schwenkgelenk;
- Figur 8: eine perspektivische Ansicht der Schutzabdeckung nach Figur 7 bei Betrachtung von der von der Scherenspitze ausgesehen rechten Seite der Schere;
- Figur 9: eine rechte Seitenansicht der Schutzabdeckung nach Figur 7;
- Figur 10: eine Ansicht von oben auf die Schutzabdeckung nach Figur 9.
- Figur 11: eine Schnittansicht entlang der Linie B-B in Figur 9.

In den Zeichnungen ist eine Ausführungsform einer Schutzabdeckung in Verbindung mit einer Ausführungsform des Schneidkopfes einer Baumschere gezeigt, wobei die gleichen Prinzipien jedoch auch für andere Scheren-Typen unter Anpassung der Form und Größe des plattenförmigen Teils und der Rasteinrichtungen der Schutzabdeckung verwendbar sind.

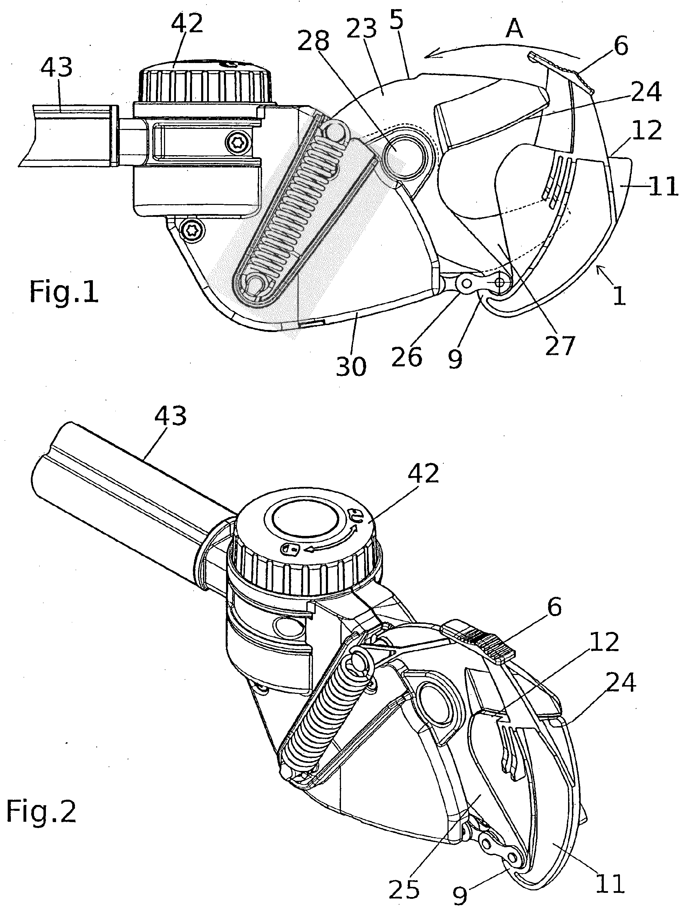

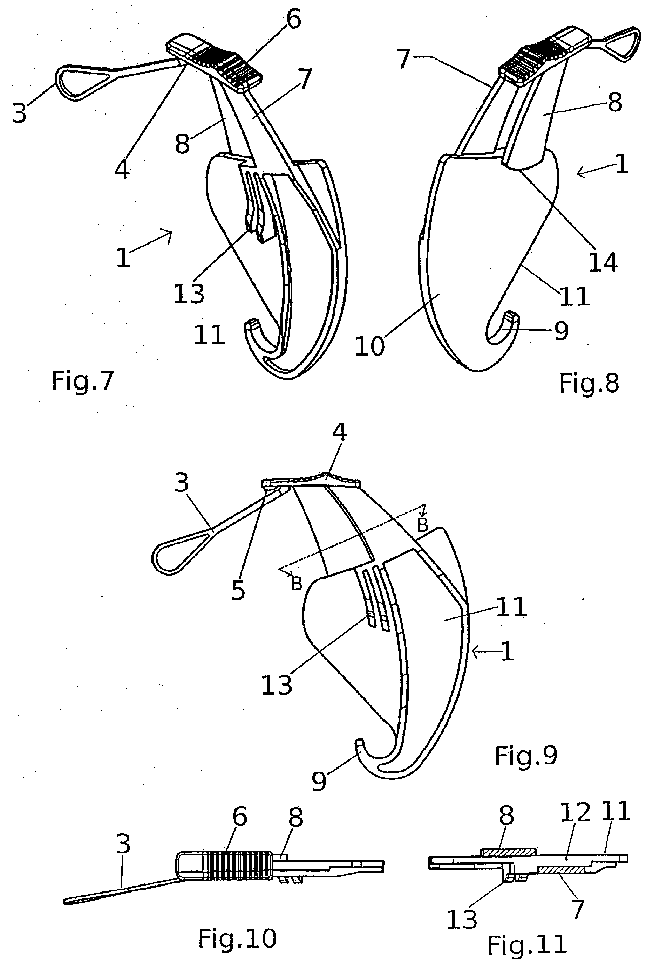

Zum besseren Verständnis wird zunächst eine Ausführungsform der Schutzabdeckung anhand der Figuren 7 bis 11 beschrieben, die beispielsweise für eine Baumschere der in den Figuren 1 bis 6 gezeigten Art Verwendung finden kann, jedoch bei Anpassung des plattenförmigen Teils auch für andere Arten von Scheren geeignet ist.

Die als Beispiel in den Figuren 1 bis 6 dargestellte Schere umfasst einen Schneidkopf, der über ein Schwenkgelenk 42 an einer Stielbefestigung 43 befestigt ist, sowie eine an dem Schneidkpf befestigte bewegliche erste Klinge 23 und eine starr an dem Schneidkopf befestigte zweite Klinge 27. Die Klingen 23 und 27 sind über ein Schwenkgelenk 28 miteinander verbunden.

Die in den Figuren 7 bis 11 gezeigte Ausführungsform der Schutzabdeckung 1 umfasst einen an der ersten Klinge 23 befestigbaren und mit dieser bewegbaren plattenförmigen Teil (11) mit einer ersten Kantenfläche 12, die im an der Schere befestigten Zustand an der Schneidkante 24 der ersten Klinge 23 anliegt, wobei sich der plattenförmige Teil 11 in der Ebene der ersten Klinge 23 von deren Schneidkante 24 aus in Richtung auf die zweite Klinge 27 derart erstreckt, dass er den im geöffneten Zustand der Schere zwischen den Schneidkanten der beiden Klingen 23, 27 liegenden Bereich abdeckt.

Die Größe und Geometrie des plattenförmigen Teils ist entsprechend an die Größe und Geometrie der abzudeckenden Klingen angepasst.

Die beiden Hauptflächen des plattenförmigen Teils 11 sind über die Kantenfläche 12 hinaus durch jeweilige Befestigungsarme 7, 8 verlängert, die zur Aufnahme der ersten Klinge 23 zwischen sich ausgebildet und an ihrem freien Ende über eine erste Rasteinrichtung 6 zum Aufrasten auf die der Schneidkante 24 entgegengesetzte Außenkante der ersten Klinge 23 verbunden sind.

Die erste Klinge 23 ist zu diesem Zweck auf ihrer der Schneidkante 24 entgegengesetzten Außenkante mit einer Rastnut 5 versehen, während die erste Rasteinrichtung 6 einen Rastnocken 4 aufweist, der in diese Rastnut 5 einrastbar ist.

An einem der Kantenfläche 12 entgegengesetzten Ende des plattenförmigen Teils 11 ist eine zweite Rasteinrichtung 9 zum Aufrasten auf das freie Ende eines Betätigungsarmes 25 der ersten Klinge angeordnet. Diese zweite Rasteinrichtung ist durch einen Haken 9 gebildet, der in der insbesondere aus Figur 2 erkennbaren Weise das freie Ende eines Betätigungsarmes 25 der ersten Klinge umgreifen kann.

Diese zweite Rasteinrichtung könnte bei anderen Typen von Scheren entsprechend an die Art und Form des Betätigungsarmes angepasst sein, wobei die wesentliche Bedingung darin besteht, dass die Schutzabdeckung an einer der Klingen bzw. deren Betätigungsarm lösbar zu befestigen ist und mit dieser Klinge beweglich ist.

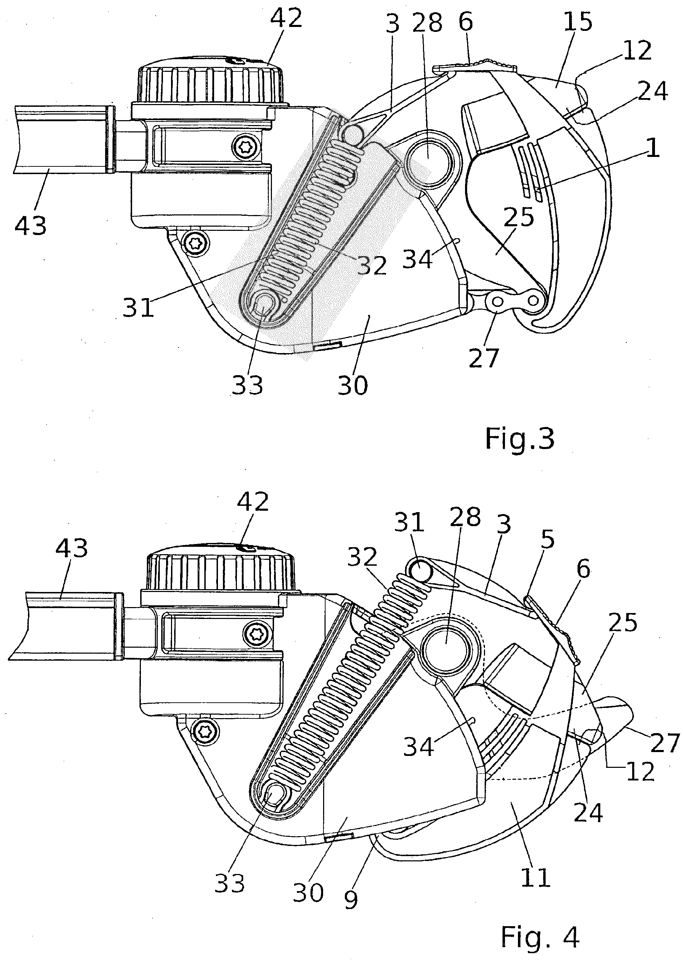

Wie dies insbesondere aus den Figuren 7 und 9 zu erkennen ist, trägt die auf der im Befestigungszustand außen liegende Hauptfläche des plattenförmigen Teil 11 erste Anschlagrippen 13, die sich bei gegeneinander geschlossenen Klingen 23, 27 in der in Figur 4 gezeigten Weise an einer Kante 34 eines Gehäuseteils 30 des Schneidkopfes der Schere abstützen können.

Der plattenförmige Teil 11 kann weiterhin eine zweite Anschlagrippe 14 aufweisen, die am Ende des Befestigungsarmes 8 ausgebildet ist, der sich über die Ebene der im Befestigungszustand innen liegenden Hauptfläche hinaus erstreckt. Diese Anschlagrippe 14 kann sich bei gegeneinander geschlossenen Klingen 23, 27 an der Schneidkante der zweiten Klinge 27 abstützen.

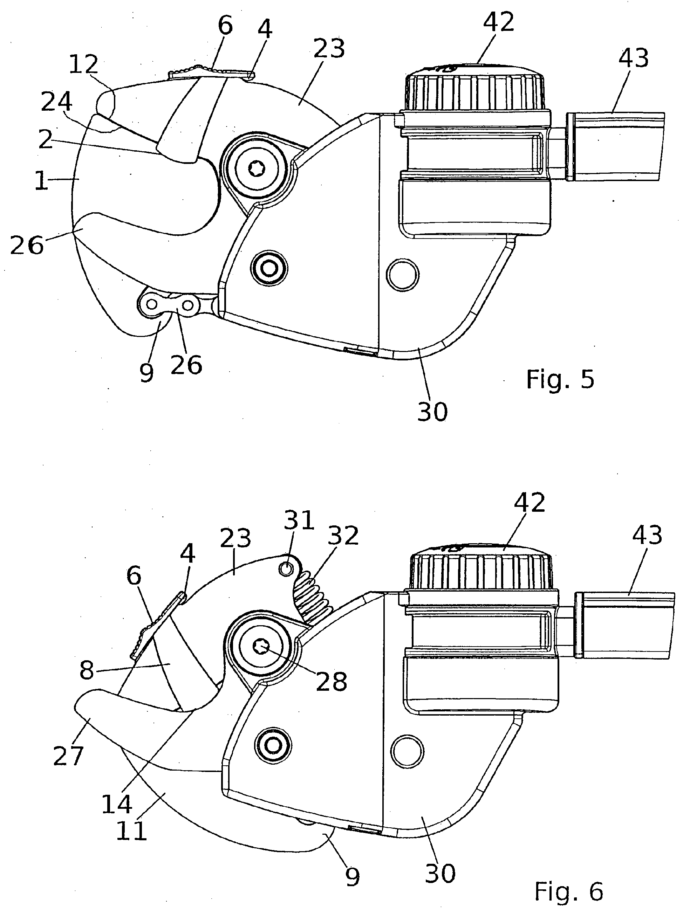

Auf diese Weise wird die Bewegung der Klingen durch die Anschlagrippen 13 und 14 begrenzt, wie dies insbesondere aus den Figuren 4 bzw. 6 zu erkennen ist.

Die Schutzabdeckung 1 ist vorzugsweise aus einem transparenten Kunststoffmaterial hergestellt, so dass bei einer Betätigung der Schere die Bewegung der Klingen 23, 27 sichtbar ist und das Erscheinungsbild der Schere nicht beeinträchtigt wird.

Im Auslieferungszustand ist die Schutzabdeckung 1 mit einer Sicherungslasche 3 versehen, die bei der in den Figuren 1 bis 6 gezeigten Ausführungsform der Schere vor der Montage einer Zugfeder 32 um einen Federbolzen 31 gelegt wird, jedoch auch an einem anderen Teil der Schere befestigt werden könnte.

Die Sicherungslasche 3 verhindert, dass die Schutzabdeckung vor dem Verkauf auf einfache Weise entnommen werden kann. Die Sicherungslasche 3 ist vorzugsweise mit einer Sollbruchstelle versehen, die vor dem praktischen Einsatz der Schere abgebrochen oder durchtrennt werden kann.

Die Figur 1 zeigt die einfache Montage der Schutzabdeckung. Die Schutzabdeckung wird mit ihrem Haken 9 am freien Ende des Betätigungsarmes 25 eingehängt, das den Anlenkpunkt einer Zugkette 26 bildet, und in einer Drehbewegung in Richtung der Klingen verschwenkt, bis der Rastnocken 4 in die Einkerbung 5 der ersten Klinge 23 einrastet. Das Ein- und Ausrasten der Schutzabdeckung wird durch die Form der ersten Rasteinrichtung 6 erleichtert.

Die Befestigungsarme 7, 8 sind in der Ebene des plattenförmigen Teils 11 versetzt angeordnet, um eine einfache Abformung zu ermöglichen.

Die beschriebene Schutzabdeckung deckt im Wesentlichen nur den gefährlichen Bereich zwischen den Klingen ab, statt den Schneidbereich von außen zu umhüllen.

Weiterhin lässt sich die Schere auch bei monierter Schutzabdeckung zu Demonstrationszwecken und zur Erprobung durch den Kunden noch fast vollständig schließen wie dies aus einem Vergleich der Figuren 3 bis 6 zu erkennen ist, von denen Figur 3 eine rechte Seitenansicht der Schere mit geöffneten Klingen und Figur 4 eine rechte Seitenansicht der Schere bei weitgehend aufeinander geschlossenen Schneidkanten der Klingen zeigt, während Figur 5 eine entsprechende linke Seitenansicht der Schere bei geöffneten Klingen und Figur eine linke Seitenansicht der Schere weitgehend aufeinander geschlossenen Klingen, jeweils mit aufgerasteter Schutzabdeckung.

## Patentansprüche

1. Schutzabdeckung (1) für eine Schere, die eine erste Klinge (23) und eine mit der ersten Klinge (23) über ein Schwenkgelenk (28) verbundene zweite Klinge (27) aufweist, die mit jeweiligen Schneidkanten versehen über das Schwenkgelenk (28) hinaus durch jeweilige starr mit den Klingen (23, 27) verbundene Betätigungsarme (25) und/oder Befestigungselemente verlängert sind, **dadurch gekennzeichnet, dass** die Schutzabdeckung (1) einen an der ersten Klinge (23) befestigbaren und mit dieser bewegbaren plattenförmigen Teil (11) mit einer ersten Kantenfläche (12) aufweist, die im an der Schere befestigten Zustand an der Schneidkante (24) der ersten Klinge (23) anliegt, wobei sich der plattenförmige Teil (11) in der Ebene der ersten Klinge (23) von deren Schneidkante (24) aus in Richtung auf die zweite Klinge (27) derart erstreckt, dass er den im geöffneten Zustand der Schere zwischen den Schneidkanten der beiden Klingen (23, 27) liegenden Bereich abdeckt.

2. Schutzabdeckung nach Anspruch 1, **dadurch gekennzeichnet, dass** der plattenförmige Teil (11) auf einer der Schneidkante (24) gegenüber liegenden Außenkante der ersten Klinge (23) sowie auf das freie Ende des Betätigungsarmes (25) aufrastbar ist.

3. Schutzabdeckung nach Anspruch 1 oder 2, **dadurch gekennzeichnet, dass** die beiden Hauptflächen des plattenförmigen Teils (11) über die Kantenfläche (12) hinaus durch jeweilige Befestigungsarme (7, 8) verlängert sind, die zur Aufnahme der ersten Klinge (23) zwischen sich ausgebildet und an ihrem freien Ende über eine erste Rasteinrichtung (6) zum Aufrasten auf die der Schneidkante (24) entgegengesetzte Außenkante der ersten Klinge (23) verbunden sind.

4. Schutzabdeckung nach Anspruch 4, **dadurch gekennzeichnet, dass** die erste Klinge (23) auf ihrer der Schneidkante (24) entgegengesetzten Außenkante eine Rastnut (5) aufweist, und dass die erste Rasteinrichtung (6) einen Rastvorsprung aufweist, der in diese Rastnut (4) einrastbar ist.

5. Schutzabdeckung nach einem der Ansprüche 3 oder 4, **dadurch gekennzeichnet, dass** an einem der Kantenfläche (12) entgegengesetzten Ende des plattenförmigen Teils (11) eine zweite Rasteinrichtung (9) zum Aufrasten auf das freie Ende des Betätigungsarmes (25) der ersten Klinge angeordnet ist.

6. Schutzabdeckung nach Anspruch 5, **dadurch gekennzeichnet, dass** die zweite Rasteinrichtung durch einen Haken (9) gebildet ist, der das freie Ende des Betätigungsarmes (25) der ersten Klinge umgreift.

7. Schutzabdeckung nach einem der vorhergehenden Ansprüche, **dadurch gekennzeichnet, dass** der plattenförmige Teil (11) erste Anschlagrippen (13) aufweist, die sich bei gegeneinander geschlossenen Klingen (23, 27) an einem Gehäuseteil (30) der Schere abstützen.

8. Schutzabdeckung nach einem der vorhergehenden Ansprüche, **dadurch gekennzeichnet, dass** der plattenförmige Teil (11) eine zweite Anschlagrippe (14) aufweist, die sich bei gegeneinander geschlossenen Klingen (23, 27) an der Schneidkante der zweiten Klinge (27) abstützt.

9. Schutzabdeckung nach einem der vorhergehenden Ansprüche, **dadurch gekennzeichnet, dass** die Schutzabdeckung aus durchsichtigem Kunststoffmaterial hergestellt ist.

10. Schutzabdeckung nach einem der vorhergehenden Ansprüche, **dadurch gekennzeichnet, dass** der plattenförmige Teil (11) eine an dem Hauptteil der Schere festlegbare Sicherungslasche (3) aufweist.

## Claims

1. A protective cover (1) for scissors having a first blade (23) and a second blade (27) connected to the first blade (23) by a pivot joint (28) which are each provided with cutting edges and extended beyond the pivot link (28) by actuating arms (25) and/or fastening elements connected rigidly to the blades (23, 27) in each case, **characterized in that**
the protective cover (1) has a plate-shaped part (11) with a first edge face (12) that can be fastened to the first blade (23) and moved therewith, which edge face bears against the cutting edge (24) of the first blade (23) in the state secured to the scissors, wherein the plate-shaped part (11) extends in the plane of the first blade (23) from the cutting edge (24) thereof in the direction of the second blade (27) in such a manner that when the scissors are in the opened state it covers the region lying between the cutting edges of the two blades (23, 27).

2. The protective cover according to claim 1, **characterized in that** the plate-shaped part (11) can be snapped onto an outer edge of the first blade (23) opposite the cutting edge (24) and also onto the free end of the actuating arm (25).

3. The protective cover according to claim 1 or 2, **characterized in that** the two main faces of the plate-shaped part (11) are extended beyond the blade face (12) by fastening arms (7, 8) in each case which are configured to receive the first blade (23) between them and are connected at their free end via a first locking device (6) for snapping onto the outer edge of the first blade (23) opposite the cutting edge (24).

4. The protective cover according to claim 4, **characterized in that** the first blade (23) has a locking groove (5) on its outer edge opposite the cutting edge (24) and that the first locking device (6) has a locking projection which can be snapped into this locking groove (4).

5. The protective covering according to one of claims 3 or 4, **characterized in that** at an end of the plate-shaped part (11) opposite the edge face (12) a second locking device (9) is arranged for snapping onto the free end of the actuating arm (25) of the first blade.

6. The protective covering according to claim 5, **characterized in that** the second locking device is formed by a hook (9) which encloses the free end of the actuating arm (25) of the first blade.

7. The protective covering according to one of the preceding claims, **characterized in that** the plate-shaped part (11) has first stop ribs (13) which rest against a housing part (30) of the scissors when blades (23, 27) are closed in respect of one another.

8. The protective covering according to one of the preceding claims, **characterized in that** the plate-shaped part (11) has a second stop rib (14) which rests against the cutting edge of the second blade (27) when the blades (23, 27) are closed in respect of one another.

9. The protective covering according to one of the preceding claims, **characterized in that** the protective covering is produced from transparent plastics material.

10. The protective covering according to one of the preceding claims, **characterized in that** the plate-shaped part (11) has a fixable securing tab (3) on the main part of the scissors.

## Revendications

1. Capot de protection (1) pour des cisailles, qui comportent une première lame (23) et une deuxième lame (27) reliée avec la première lame (23) par l'intermédiaire d'une articulation pivotante (28), qui munies d'arêtes de coupe respectives, sont prolongées au-delà de l'articulation pivotante (28) par des bras d'actionnement (25) et/ou éléments de fixation respectifs, reliés de manière rigide avec les lames (23, 27), **caractérisé en ce que**
le capot de protection (1) comporte une première pièce (11) en forme de plaque pouvant se fixer sur la première lame (23) et mobile avec celle-ci, avec une première face d'arête (12), qui en position fixée sur les cisailles est adjacente à l'arête de coupe (24) de la première lame (23), la pièce (11) en forme de plaque s'étendant dans le plan de la première lame (23), à partir de l'arête de coupe (24) de celle-ci, dans la direction vers la deuxième lame (27), de sorte à recouvrir la région située entre les arêtes de coupe des deux lames (23, 27), en position ouverte des cisailles.

2. Capot de protection selon la revendication 1, **caractérisé en ce que** la pièce {11) en forme de plaque est enclenchable sur une arête extérieure de la première lame (23) qui est opposée à l'arête de coupe (24), ainsi que sur l'extrémité libre du bras d'actionnement (25).

3. Capot de protection selon la revendication 1 ou 2, **caractérisé en ce que** les deux surfaces principales de la pièce (11) en forme de plaque sont prolongées au-delà de la face d'arête (12) par des bras de fixation (7, 8) respectifs, qui sont conçus pour recevoir entre eux la première lame (23) et qui sont reliés sur leur extrémité libre par l'intermédiaire d'un premier système d'enclenchement (6), destiné à être enclenché sur l'arête extérieure de la première lame (23) qui est opposée à l'arête de coupe (24).

4. Capot de protection selon la revendication 4, **caractérisé en ce que** sur son arête extérieure opposée à l'arête de coupe (24), la première lame (23) comporte une rainure d'enclenchement (5) et **en ce que** le premier système d'enclenchement (6) comporte une saillie d'enclenchement qui est enclenchable dans ladite rainure d'enclenchement (4).

5. Capot de protection selon l'une quelconque des revendications 3 ou 4, **caractérisé en ce que** sur une extrémité de la pièce (11) en forme de plaque qui est opposée à la face d'arête (12) est placé un deuxième système d'enclenchement (9) destiné à s'enclencher sur l'extrémité libre du bras d'actionnement (25) de la première lame.

6. Capot de protection selon la revendication 5, **caractérisé en ce que** le deuxième système d'enclenchement est formé par un crochet (9) qui entoure l'extrémité libre du bras d'actionnement (25) de la première lame.

7. Capot de protection selon l'une quelconque des revendications précédentes, **caractérisé en ce que** la pièce (11) en forme de plaque comporte des premières nervures de butée (13), qui lorsque les lames (23, 27) sont fermées l'une contre l'autre, s'appuient sur une partie du boîtier (30) des cisailles.

8. Capot de protection selon l'une quelconque des revendications précédentes, **caractérisé en ce que** la pièce (11) en forme de plaque comporte une deuxième nervure de butée (14), qui lorsque les lames (23, 27) sont fermées l'une contre l'autre, s'appuie sur l'arête de coupe de la deuxième lame (27).

9. Capot de protection selon l'une quelconque des revendications précédentes, **caractérisé en ce que** le capot de protection est fabriqué en une matière plastique transparente.

10. Capot de protection selon l'une quelconque des revendications précédentes, **caractérisé en ce que** la pièce (11) en forme de plaque comporte une patte de blocage (3) pouvant s'immobiliser sur la partie principale des cisailles.
